# DEMANDE DE BREVET EUROPEEN

(11) **EP 1 508 774 A1**
(43) Date de publication de la demande: **23.02.2005**
(21) Numéro de dépôt: 04291897.9
(22) Date de dépôt: 26.07.2004
(51) Int. Cl.: G01C 19/56

(54) **Capteur de rotation inertiel à élément sensible monté directement sur le corps**

(30) Priorité: 19.08.2003 FR 0310003
(71) Demandeur: Sagem SA, 75015 Paris (FR)
(72) Inventeur: Jeanroy, Alain, 78700 Conflans Sainte-Honorine (FR); Caron, Jean-Michel, 95210 Saint-Gratien (FR)
(74) Mandataire: Fruchard, Guy

(57) **Abrégé**

Le capteur de rotation inertiel comprend un corps (10) dans lequel sont montés des éléments sensibles comportant chacun un résonateur en forme de cloche fixé en regard d'électrodes portées par un socle porte-électrodes (3), le corps (10) étant réalisé dans une matière ayant un coefficient de dilatation thermique voisin du socle porte-électrodes (3), et le socle porte-électrodes (3) étant directement fixé sur le corps (10).

## Description

La présente invention concerne un capteur de rotation inertiel.

### ARRIERE PLAN DE L'INVENTION

On connaît des capteurs de rotation inertiels comportant un corps, généralement en aluminium, portant trois éléments sensibles dont les axes s'étendent selon des directions orthogonales de façon que la mesure de rotation effectuée par chaque résonateur permette de déterminer la trajectoire dans l'espace de l'objet portant le capteur.

Chaque élément sensible comporte un résonateur en forme de cloche sensiblement hémisphérique, généralement en silice, fixé sur un socle également en silice qui porte les électrodes principales et une ou plusieurs électrodes de garde adjacentes aux électrodes principales. Cet ensemble doit être maintenu sous vide afin de ne pas perturber le fonctionnement du résonateur par un amortissement gazeux.

Il reste alors le problème des liaisons mécanique et électrique de l'élément sensible avec le corps du capteur généralement en aluminium.

Le coefficient de dilatation thermique du corps en aluminium est très différent de celui de l'élément sensible en silice. Afin de ne pas induire dans le socle porte-électrodes, lors de variations de température du corps, des contraintes mécaniques qui affecteraient les mesures effectuées avec le résonateur, il est indispensable d'introduire une liaison souple entre le porte-électrodes et le corps du capteur. Cette liaison mécanique souple (habituellement pièce en forme de pince souple ou tiges très fines travaillant en flexion) est généralement disposée entre le socle porte-électrodes et une embase, réalisée dans un matériau métallique à coefficient de dilatation proche de celui du corps. L'embase de l'ensemble ainsi réalisé peut être aisément fixée sur le corps par collage, brasage ou tout autre moyen de fixation, les coefficients de dilatation des deux pièces à réunir étant très proches (il est habituel de réaliser l'embase dans le même matériau que le corps).

Il faut cependant remarquer que cette liaison souple introduit des fréquences de résonance parasites qui nuisent à la qualité des mesures effectuées et imposent donc des contraintes supplémentaires dans la conception du capteur.

Par ailleurs, les diverses électrodes portées par le socle porte-électrodes en silice doivent pouvoir être reliées à l'unité de traitement assurant le fonctionnement du résonateur hémisphérique par l'intermédiaire d'un système de liaisons électriques respectant la contrainte de fonctionnement dans le vide du résonateur. Ce système est généralement constitué de tiges traversant l'embase de façon étanches. Ces mêmes tiges peuvent également servir de support mécanique souple (tiges très fines travaillant en flexion) pour le porte-électrodes comme indiqué précédemment.

La technologie actuellement disponible impose une dimension minimale pour la liaison électrique étanche, et éventuellement de la liaison mécanique souple quant elle est assurée indépendamment de la liaison électrique, ce qui, compte tenu du nombre d'électrodes à relier et des contraintes mécaniques à respecter, conduit à une dimension importante de l'embase et du porte-électrodes.

Il résulte de ce qui précède que le volume total de chaque élément sensible est au minimum de l'ordre de 40 cm³ à 60 cm³ et que la réduction de la taille du résonateur ne permet pas de réduire la taille globale du capteur de rotation.

### OBJET DE L'INVENTION

Un but de l'invention est de réaliser un capteur de rotation inertiel présentant un volume réduit par rapport aux capteurs antérieurs tout en ayant des performances au moins égales à celles des capteurs antérieurs.

### BREVE DESCRIPTION DE L'INVENTION

En vue de la réalisation de ce but, on propose selon l'invention un capteur de rotation inertiel comprenant un corps dans lequel est monté au moins un élément sensible comportant un résonateur en forme de cloche fixé en regard d'électrodes portées par un socle porte-électrodes, le corps étant réalisé dans une matière ayant un coefficient de dilatation thermique voisin du socle porte-électrodes, et le socle porte-électrodes étant directement fixé sur le corps.

Ainsi la réalisation du corps dans une matière ayant un coefficient de dilatation thermique voisin du socle porte-électrodes permet non seulement de réduire la dimension du capteur en supprimant l'embase et la liaison mécanique souple associée habituellement nécessaire pour monter le résonateur sur le corps, mais permet en outre la suppression des résonances parasites résultant de cette liaison. Le capteur est donc amélioré tant du point de vue de son encombrement que de ses performances.

Selon une version avantageuse de l'invention les électrodes comprennent des pattes de connexion qui s'étendent sur un côté du socle porte-électrodes. Ainsi, les électrodes peuvent être reliées à l'unité de traitement extérieur sans qu'il soit nécessaire d'effectuer une traversée du socle porte-électrodes de sorte que l'encombrement du socle porte-électrodes peut encore être réduit.

### BREVE DESCRIPTION DES DESSINS

D'autres caractéristiques et avantages de l'invention apparaîtront à la lecture de la description qui suit en relation avec les figures ci-jointes parmi lesquelles :
- la figure 1 est une vue en perspective d'un capteur de rotation inertiel selon l'invention, l'un des éléments sensibles étant mis en place sur le corps,
- la figure 2 est une vue en coupe axiale d'un résonateur selon la ligne II-II de la figure 3,
- la figure 3 est une vue de dessus des électrodes de l'élément sensible pris en coupe selon la ligne III-III de la figure 2.

### DESCRIPTION DETAILLEE DE L'INVENTION

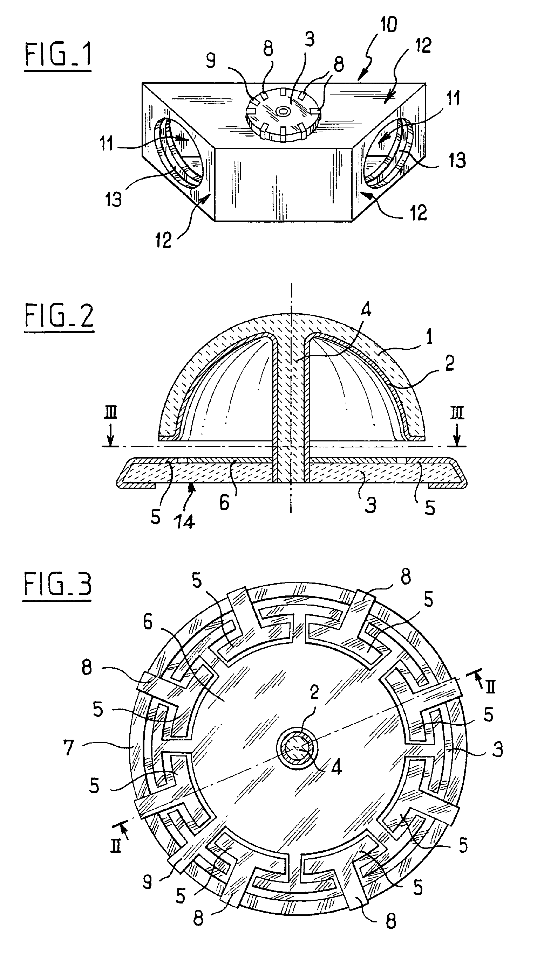

Pour une meilleure compréhension de l'invention, l'élément sensible a été représenté sur les figures 2 et 3 à une échelle très agrandie par rapport à l'échelle du corps de la figure 1 et en exagérant les épaisseurs des électrodes et des entrefers.

Dans le mode de réalisation illustré, l'élément sensible comporte de façon connue en soi un organe vibrant hémisphérique 1, par exemple une cloche réalisée en silice et fixée par une tige 4 à un socle 3 également en silice. La surface interne de la cloche 1 ainsi que le bord de celle-ci et la tige 4 sont recouverts d'une couche de métal 2. Le socle 3 porte des électrodes principales 5 et une électrode de garde 6 dont le bord entoure les électrodes principales 5.

Selon l'invention, les électrodes 5 comprennent des pattes de connexion 8 qui s'étendent sur le côté 7 du socle porte-électrodes et débouchent sur une face 14 du socle porte-électrodes opposée aux électrodes 5. De même l'électrode de garde 6 comporte une patte de connexion 9 qui s'étend sur le côté 7 du socle porte-électrodes et débouche sur la face opposée.

De façon connue en soi les éléments sensibles sont destinés à être montés dans un corps creux 10 comportant des ouvertures 11 débouchant dans trois faces 12 orthogonales les unes aux autres et communiquant entre elles.

Selon l'invention le corps 10 est réalisé dans une matière ayant un coefficient de dilatation thermique voisin du socle porte-électrodes 3, par exemple en silice ou en invar. Chaque socle porte-électrodes 3 est fixé de façon hermétique par collage directement sur une surface annulaire plane 13 entourant une ouverture 11 (voir figure 1).

L'invention s'applique à des capteurs de rotation utilisant des résonateurs de différents diamètre, aussi bien des résonateurs de diamètre identiques à ceux utilisés dans les réalisations classiques c'est-à-dire de 20 à 60 mm, que des résonateurs de diamètre plus faible, par exemple de l'ordre de 10 mm. Dans ce cas le volume du capteur de rotation peut être inférieur à 10 cm³.

Bien entendu, l'invention n'est pas limitée au mode de réalisation décrit et on peut y apporter des variantes de réalisation sans sortir du cadre de l'invention tel que défini par les revendications.

En particulier, bien qu'il ait été prévu d'appliquer une colle directement sur le bord 7 du porte-électrodes et les pattes de connexion 8 et 9, on peut prévoir de recouvrir d'abord le bord du socle porte-électrodes avec une matière électriquement isolante destinée à compenser la surépaisseur réalisée par les pattes de connexion.

Dans le cas où le socle porte-électrodes a une épaisseur telle qu'il s'étend légèrement en saillie de la face du corps 10, comme illustré sur la face supérieure à la figure 1, les pattes de connexion 8 et 9 peuvent s'étendre sur le côté seulement du porte-électrodes sans s'étendre sur la face opposée aux électrodes, ce qui simplifie la fabrication des pattes de connexion tout en permettant une liaison aisée avec l'unité de traitement sans traversée du socle porte-électrodes.

On peut également réaliser la liaison électrique avec les électrodes de façon classique en assurant une traversée du socle porte-électrodes en regard des électrodes et en prévoyant une matière d'étanchéité dans les conduits de traversée. On peut encore réaliser la liaison électrique par des conduits traversant le socle porte-électrodes en regard des électrodes et remplis d'une matière d'étanchéité conductrice. Ceci permet une réalisation peu coûteuse du porte-électrodes par des moyens de production en série connus en microélectronique.

Bien que le résonateur illustré comporte une seule électrode de garde comportant une seule patte de connexion 9, on peut prévoir plusieurs pattes de connexion disposées de façon symétrique par rapport à la tige 4 de la cloche afin d'éviter des effets parasites de la patte de connexion. On peut également effectuer une division de l'électrode de garde en plusieurs parties formant des électrodes auxiliaires qui s'étendent de façon alternée entre les électrodes principales 5. Dans le cas où les pattes de connexion s'étendent sur le côté du socle porte-électrodes, une connexion entre des électrodes auxiliaires reliées à une borne commune peut être réalisée sur la face du socle porte-électrodes opposée aux électrodes.

Bien que l'invention ait été illustrée avec un capteur comportant un corps supportant trois éléments sensibles, on peut également réaliser un capteur comportant un nombre différent d'éléments sensibles, par exemple un, deux, ou quatre avec des axes orthogonaux ou non.

Bien entendu le capteur de rotation inertiel selon l'invention peut également comporter les organes habituels tels qu'un organe de mise sous vide, ou un organe absorbeur de molécules fixé à l'intérieur du corps. Le corps peut également recevoir des accéléromètres, de préférence fixés par collage.

La liaison du corps avec un châssis externe se fera de préférence par l'intermédiaire d'une suspension élastique, par exemple des plots en élastomère qui absorbent les dilatations différentielles entre le corps et le châssis externe sans perturber le fonctionnement du capteur.

## Revendications

1. Capteur de rotation inertiel comprenant un corps (10) dans lequel est monté au moins un élément sensible comportant un résonateur en forme de cloche (1) fixé en regard d'électrodes (5) portées par un socle porte-électrodes (3), le résonateur (1) et le socle porte-électrodes (3) ayant des coefficients de dilatation thermique voisins, **caractérisé en ce que** le corps (10) est réalisé dans une matière ayant un coefficient de dilatation thermique voisin du socle porte-électrodes (3), et **en ce que** le socle porte-électrodes (3) est directement fixé sur le corps (10).

2. Capteur selon la revendication 1, **caractérisé en ce que** le résonateur (1), le socle porte-électrodes (3) et le corps (10) sont en silice.

3. Capteur selon la revendication 1, **caractérisé en ce que** les électrodes (5, 6) comprennent des pattes de connexion (8, 9) qui s'étendent sur un côté (7) du socle porte-électrodes (3) pour déboucher à l'extérieur du corps.

4. Capteur selon la revendication 3, **caractérisé en ce que** les pattes de connexion s'étendent en outre sur une face (14) du socle porte-électrodes (3) opposée aux électrodes (5, 6).
